# EUROPÄISCHE PATENTSCHRIFT

(11) **EP 0 950 315 B1**
(45) Veröffentlichungstag und Bekanntmachung des Hinweises auf die Patenterteilung: **30.06.2004**
(21) Anmeldenummer: 97951877.6
(22) Anmeldetag: 10.11.1997
(51) Int. Cl.: H04N 5/222

(54) **SPIELGERÄT FÜR UNTERHALTUNGSSHOW**
GAME DEVICE FOR AN ENTERTAINMENT SHOW
APPAREIL DESTINE A UN JEU D'ANIMATION

(43) Veröffentlichungstag der Anmeldung: 20.10.1999
(73) Patentinhaber: Frank Elstner Produktion S.A., 1024 Luxembourg (LU)
(72) Erfinder: ELSTNER, Thomas, L-1225 Luxembourg (LU)
(74) Vertreter: Konle, Tilmar, Dipl.-Ing.
(86) Internationale Anmeldenummer: PCT/EP1997/006241
(87) Internationale Veröffentlichungsnummer: WO 1999/025113

(56) Entgegenhaltungen:
- DE-A- 3 222 266
- US-A- 5 088 739
- US-A- 5 193 818
- SMITH P: "NEW EFFECTS IN VIDEO WALLS" IMAGE TECHNOLOGY (JOURNAL OF THE BKSTS), Bd. 72, Nr. 9, 1.September 1990, Seiten 330-333, XP000141730

## Beschreibung

Die Erfindung bezieht sich auf ein Spielgerät zum Durchführen einer Unterhaltungsshow, insbesondere in einem Fernsehstudio.

Unterhaltungsshows in Form von Ratespielen für Mitspieler (Kandidaten) werden üblicherweise so ausgestaltet, daß den Kandidaten Fragen gestellt und derjenige Kandidat Gewinnpunkte gewinnt, welcher als erster die richtige Antwort gibt. Zur Feststellung, welcher Kandidat auf eine Frage als Erster reagiert, müssen die Kandidaten auf einen Auslöseschalter, einen sogenannten Buzzer drücken, wenn sie auf eine Frage reagieren wollen. Die Buzzers sind mit einem optischen Signal gekoppelt, das beim Drücken der Buzzers aufleuchtet. Die Gewinnpunkte, die jeder Kandidat im Laufe der Show sammelt, werden als momentaner Zählerstand auf einer Anzeige wiedergegeben.

Um die Reihenfolge der Fragen einem Zufallsprinzip zu unterwerfen, ist es bereits bekannt, auf einer aus mehreren Monitoren zusammengesetzten Monitorwand einzelne Fragenthemen, z.B. Sport, Literatur, Geschichte, Film, Theater etc., in einer waagrechten Reihe und vertikal unter den einzelnen Themen gestaffelte Gewinnpunktzahlen (z.B. 100, 80, 60, 40) wiederzugeben. Einer der Kandidaten (z.B. der Kandidat, welcher die letzte Frage als Erster richtig beantwortet hat) wählt ein Thema und eine Gewinnpunktzahl aus, worauf eine Frage aus dem angegebenen Thema mit einem der ausgewählten Gewinnpunktzahl entsprechenden Schwierigkeitsgrad vom Moderator vorgelesen und für die Fernsehzuschauer in das Fernsehbild eingeblendet wird. Die für das angegebene Thema ausgewählte Gewinnpunktezahl verschwindet nach Stellung der Frage auf der Monitorwand, so daß mit fortschreitendem Spielverlauf die Auswahlmöglichkeiten für die Kandidaten auf der Monitorwand immer stärker reduziert werden.

Die Bildgestaltung und -dramaturgie leidet indessen bei Unterhaltungsshows der bekannten Art daran, daß nur eine geringe szenische Bewegung bzw. Veränderung vorhanden ist. Auch die Monitorwand als Bühnenelement ist für die Bildgestaltung wenig ergiebig, da sich die Anzeigen auf der Monitorwand nur geringfügig von Frage zu Frage ändern. Hinzu kommt, daß die Plätze für die Kandidaten mit den Buzzers räumlich getrennt von der Monitorwand angeordnet sind, so daß die Studiokameras zwischen Kandidaten und Monitorwand hin- und herschwenken müssen, was den szenischen Zusammenhang der Show auseinanderreißt.

Die Aufgabe der Erfindung besteht demgegenüber darin, ein Spielgerät der eingangs erwähnten Art dahingehend zu verbessern, daß eine Unterhaltungsshow bilddramaturgisch dynamischer gestaltet werden kann.

Diese Aufgabe wird erfindungsgemäß durch die kennzeichnenden Merkmale des Patentanspruchs 1 gelöst.

Vorteilhafte Ausgestaltungen und Weiterbildungen des Spielgerätes nach Anspruch 1 sind in den Unteransprüchen angegeben.

Die Erfindung beruht auf der neuartigen und überraschenden Überlegung, die Monitorwand als Spielgerät einzusetzen und dabei die Kandidaten und die Monitorwand in eine räumlich eindeutige szenische Zuordnung zu bringen. Dies erfolgt beispielsweise dadurch, daß sich die Kandidaten hinter der Monitorwand auf einer Tragvorrichtung, z.B. Plattform, befinden, so daß sie wenigstens mit ihren Köpfen, vorzugsweise mit ihren Oberkörpern, die Oberkante der Monitorwand überragen. Optisch kann daher zu jedem Kandidaten ein bestimmter Bereich der Monitorwand eindeutig zugeordnet werden. Drückt ein Kandidat seinen Buzzer (der für die Zuschauer nicht mehr sichtbar sein muß), so wird auf einen Bereich der Monitorwand unterhalb des betreffenden Kandidaten, vorzugsweise ein vertikaler Streifen, der über die gesamte Höhe der Monitorwand verläuft, ein optisches Signal, z.B. die Signalfarbe rot, wiedergegeben. Auf diese Weise hat die Bildregie eine Vielzahl von Möglichkeiten, das Drücken eines Buzzers bilddramaturgisch zu verstärken. Als weitere Besonderheit wird die Monitorwand zur gezielten Wiedergabe von stehenden Bildern oder bewegten Bildsequenzen zu den einzelnen Fragen benutzt, womit der Ablauf der Unterhaltungsshow szenisch aufgelockert und dramaturgisch effektvoller bzw. dynamischer wird. Für die Anzeige der Gewinnpunkte wird nicht mehr fast die gesamte Fläche der Monitorwand verbraucht, da die Kandidaten ohnehin nicht mehr auf die Monitorwand blicken. Entweder werden alle Gewinnpunkte für das Studio- und Fernsehpublikum auf einem relativ kleinen vertikalen Streifen der Monitorwand wiedergegeben oder es wird nur die momentan gespielte Gewinnpunktezahl auf einem Feld der Monitorwand gezeigt. Wesentlich ist, daß Monitorwand und Kandidaten optisch untrennbar verbunden sind, so daß bei der Wiedergabe von Bildern, Grafik, Text und Zahlen auf der Monitorwand die Kandidaten gleichzeitig "im Bild" sind. Die Studiokameras brauchen daher nicht mehr zwischen Monitorwand und Kandidaten hin- und herzuschwenken.

Die Erfindung wird anhand eines Ausführungsbeispiels in den Zeichnungen näher erläutert. Es zeigt:
- Fig. 1: eine Vorderansicht einer Monitorwand eines Ausführungsbeispiels eines erfindungsgemäßen Spielgerätes
- Fig. 2: einen Vertikalschnitt durch die Monitorwand eines weiteren Ausführungsbeispiels mit einer hinter der Monitorwand befindlichen Plattform für die Aufstellung der Kandidaten, und
- Fig. 3: ein elektrisches Blockschaltbild eines weiteren Ausführungsbeispiels eines erfindungsgemäßen Spielgerätes.

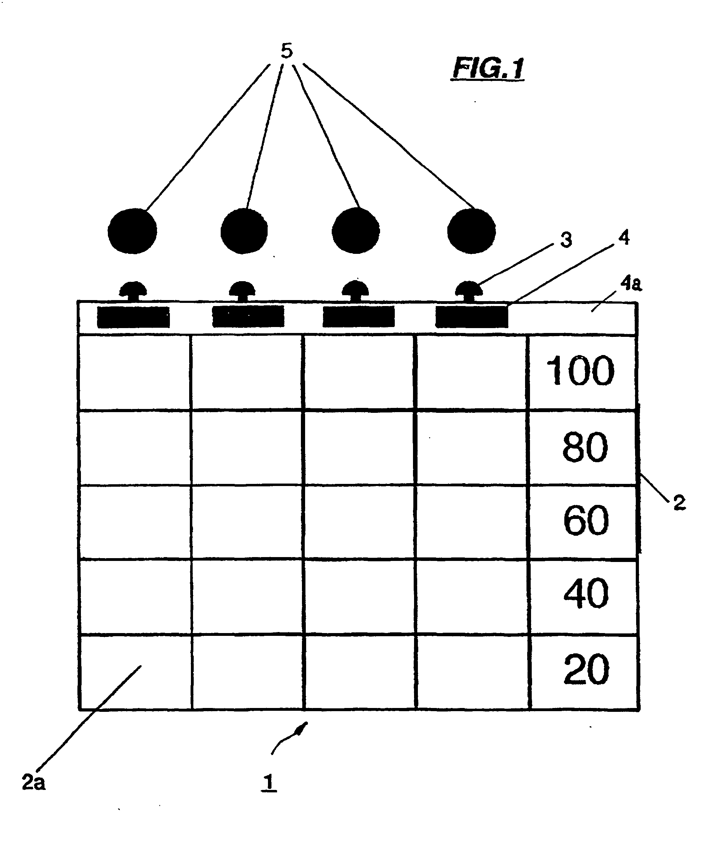

Das in Fig. 1 dargestellte Spielgerät 1 wird beispielsweise in einem Fernsehstudio aufgebaut, um eine Unterhaltungsshow, beispielsweise in Form eines Ratespiels, mit mehreren Kandidaten durchzuführen. Die Unterhaltungsshow wird mit Hilfe mehrerer, nicht dargestellter Videokameras aufgezeichnet.

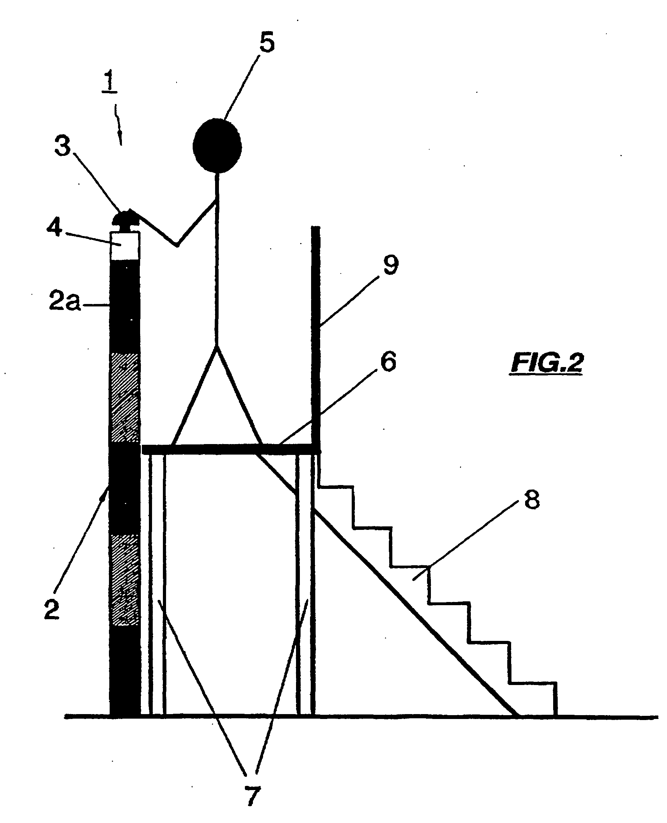

Das Spielgerät 1 weist eine Monitorwand 2 auf, welche aus mehreren Monitoren 2a zusammengesetzt ist. Im Falle von Fig. 1 ist die Monitorwand 2 aus 5x5 Monitoren 2a aufgebaut. Wesentlich ist, daß die Monitorwand 2 integraler Bestandteil des Spielgerätes 1 ist. Diese zentrale Einbeziehung der Monitorwand 2 wird im folgenden an Hand von Fig. 2 erläutert.

Wie die schematische Darstellung von Fig. 2 zeigt, befindet sich auf der Rückseite der Monitorwand 2 - also für das Publikum und die Videokameras im Studio nicht sichtbar - als Tragvorrichtung eine begehbare Plattform 6 in einer solchen Höhe, daß die darauf befindlichen Kandidaten der Show zumindest mit ihren Köpfen 5 über die Oberkante der Monitorwand 2 ragen. Vorzugsweise sind nicht die Köpfe 5 der Kandidaten, sondern auch deren Brust und Arme für das Studiopublikum auf der Vorderseite der Monitorwand 2 sichtbar. Anstelle einer Plattform 6 ist es ebensogut möglich, die Kandidaten mit Hilfe anderer Tragvorrichtungen hinter der Monitorwand zu plazieren, beispielsweise hängend an Trapezen, in gläsenden Fahrstühlen, Hochsitzen oder dergleichen. Denkbar ist ferner, daß die Monitorwand oberhalb von sitzenden oder stehenden Kandidaten angebracht ist, womit dieselbe feste räumliche Zuordnung zwischen Kandidaten und Monitorwand 2 erreicht werden kann wie im Falle der Positionierung der Kandidaten oberhalb der Oberkante der Monitorwand 2.

Bei Verwendung einer Plattform 6 als Tragvorrichtung wird die Plattform 6 in der gewünschten Höhenlage durch ein vorzugsweise höhenverstellbares Gerüst 7 gehalten. Eine Treppe 8 führt vom Studioboden zu der Plattform 6 hinauf. Um Unfälle zu vermeiden ist die Plattform 6 mit einem rückwärtigen Geländer 9 versehen.

Bei der in Fig. 1 und 2 dargestellten Ausführungsform sind auf der Oberkante der Monitorwand 2 die Buzzer 3 für die Kandidaten angebracht, im dargestellten Beispielsfalle vier Buzzer 3 für vier nebeneinander längs der Monitorwand 2 in etwa gleichen Abständen (beginnend von der linken Seitenkante der Monitorwand 2) positionierten Kandidaten. Die sichtbare Anbringung der Buzzer 4 auf der Oberkante der Monitorwand 2 ist jedoch nicht unbedingt erforderlich, da das Drücken eines Buzzers 3 durch den zuerst auf eine Frage reagierenden Kandidaten bei dem erfindungsgemäßen Spielgerät auf einem Bereich der Monitorwand 2 unterhalb des betreffenden Kandidaten durch ein optisches Signal, beispielsweise einer Signalfarbe, dem Studio- und Femsehpublikum signalisiert wird.

Zusätzlich zu den Buzzers 3 kann, wie in Fign. 1 und 2 ebenfalls nur beispielhaft gezeigt ist, auf der Oberseite der Monitorwand 2 eine Konsole 4a mit Ziffernanzeigen 4 für die Kandidaten angebracht werden, welche die momentanen Zählerstände der von den Kandidaten gewonnenen Punkte dem Studio- und dem Femsehpublikum anzeigen. Alternativ kann die Konsole 4a mit den Ziffemanzeigen 4 an der Unterkante der Monitorwand 2 oder als Hängekonsole oberhalb der Köpfe 5 der Kandidaten angebracht werden. Ferner ist es möglich, die Punktestände direkt auf der Monitorwand 2 unterhalb bzw. oberhalb jedes einzelnen Kandidaten anzuzeigen, und zwar durch Einblenden der Ziffern des Punktestandes in die Videosignale für die Monitore 2a unterhalb bzw. oberhalb der betreffenden Kandidaten.

Auf der Monitorwand 2 können ferner die gestaffelten Gewinnpunkte (in Fig. 1 in der Staffelung 100, 80, 60, 40, 20) vertikal übereinander wiedergegeben werden. Der Schwierigkeitsgrad der Fragen entspricht der Bemessung der Anzahl von Gewinnpunkten, also z.B. 100 Gewinnpunkte für sehr schwierige Fragen, 80 Gewinnpunkte für schwierige Fragen, 60 Gewinnpunkte für nicht ganz einfache Fragen, 40 Gewinnpunkte für einfachere Fragen und 20 Gewinnpunkte für sehr einfache Fragen. Es ist ebensogut möglich, daß auf der Monitorwand 2 nur die jeweils von einem Kandidaten ausgewählte Gewinnpunktezahl angezeigt wird.

Bei vertikaler Darstellung der gestaffelten Gewinnpunkte auf der Monitorwand 2 kann die Anzeige z.B. in der Weise erfolgen, daß alle Gewinnpunkte während der Fragen an die Kandidaten dauernd angezeigt bleiben, wobei jedoch die momentan gespielten Gewinnpunkte bei der Wiedergabe abweichend von den anderen Gewinnpunkten optisch hervorgehoben werden, z.B. durch andere Helligkeit und/oder Farbe.

Das Studio- und gegebenenfalls Fernsehpublikum erhält durch das Spielgerät 1 während der gesamten Show eine ununterbrochene Information über den Spielstand. Werden mehrere Runden gespielt, wobei z.B. nach jeder Runde der Kandidat mit dem geringsten Punktestand ausscheidet, so erkennt das Publikum wiederum durch einen Blick auf die Monitorwand 2 und die darüber bzw. darunter sichtbaren Kandidaten, wie das Spiel momentan steht, welchen Schwierigkeitsgrad die Frage momentan hat, wie der Punktestand der einzelnen Kandidaten ist und wer von den Kandidaten als erster seinen Buzzer 3 gedrückt hat.

Zur optischen Wiedergabe von kandidatenspezifischen Daten kann es selbstverständlich auch gehören, die Vornamen der Kandidaten auf den Bereichen der Monitorwand 2 unterhalb bzw. oberhalb der jeweiligen Kandidaten videomäßig einzublenden.

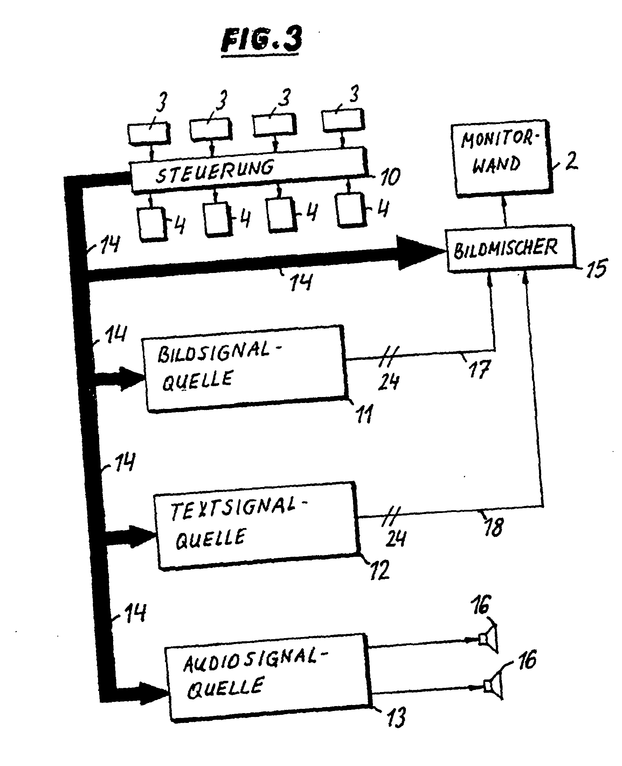

Eine ganz wesentliche Maßnahme besteht bei der vorliegenden Erfindung darin, auf der Monitorwand 2 nicht nur Text einschließlich Zahlen und Grafik wiederzugeben, sondern über die gesamte Monitorwand 2 - gegebenenfalls auch nur über mehrere Monitoren 2a hinweg - stehende Bilder oder bewegte Bildsequenzen wiederzugeben. Durch diese Bildwiedergabe bieten sich für die Unterhaltungsshow dramaturgisch neue Effekte, wobei die Kandidaten auch während der Bildwiedergabe stets "im Bild" bleiben. Die Wiedergabe von Bildern und Text auf der Monitorwand 2 erfolgt mit Hilfe einer elektronischen Schaltung, welche in Fig. 3 beispielhaft anhand eines Blockschaltbildes dargestellt ist.

Wie Fig. 3 zeigt, übernimmt eine Steuereinrichtung 10, z.B. ein mit geeigneter Software programmierter Computer, das gesamte Bild-, Text- und Audio-Management für die Monitorwand 2. Die wiederzugebenden bewegten oder stehenden Bilder werden von einer Bildsignalquelle 11 zur Verfügung gestellt, welche über einen Datenbus 14 mit der Steuereinrichtung 10 kommuniziert. Die Steuereinrichtung 10 überträgt dabei an die Bildsignalquelle 11 Befehlssignale, welche zugeordnete Einzelbilder oder Bildsequenzen abrufen und auf die Videosignalleitung 17 am Ausgang der Bildsignalquelle 11 schalten. Der erfolgreiche Abruf der gewünschten Bildsignale wird von der Bildsignalquelle 11 über den Datenbus 14 an die Steuereinrichtung 10 zurückgemeldet, so daß die Steuereinrichtung 10 stets den momentanen Bildstatus überwachen kann.

In gleicher Weise wie die Bildsignalquelle 11 steuert die Steuereinrichtung 10 eine Textsignalquelle 12 und, falls erforderlich, eine Audiosignalquelle 13 über den Datenbus 14. Die von der Steuereinrichtung 10 abgerufenen Audiosignale (welche ein-, zwei - oder mehrkanalig sein können) werden über Studiolautsprecher 16 wiedergegeben. Die von der Steuereinrichtung 10 abgerufenen Textsignale (welche Buchstaben, Ziffern, Graphiksymbole, Graphiken und dergl. umfassen können) werden auf die Textsignalleitung 18 am Ausgang der Textsignalquelle 12 geschaltet.

Die Videosignalleitung 17 und die Textsignalleitung 18 bestehen jeweils aus einem Leitungsbündel zu je 25 Einzelleitungen für die in Fig. 1 beispielhaft vorgesehenen 25 Monitore 2a. Dies bedeutet, daß für jeden einzelnen Monitor 2a der Monitorwand 2 eine gesonderte Videosignalleitung 17 und eine gesonderte Textsignalleitung 18 vorhanden ist, so daß die Wiedergabe von Bild und Text auf jedem einzelnen Monitor 2a gesondert von der Steuereinrichtung 10 gesteuert wird.

Die Steuereinrichtung 10 ist ferner mit den Buzzem 3 elektrisch verbunden, um feststellen zu können, welcher Buzzer 3 nach erfolgter Wiedergabe eines Einzelbildes oder einer Bildsequenz als Erster gedrückt worden ist. Die Steuereinrichtung 10 ordnet jedem Buzzer 3 einen festgelegten Bereich (vorzugsweise einen vertikalen Streifen über die gesamte Höhe) der Monitorwand 2 unterhalb des betreffenden Kandidaten zu. Derjenige Buzzer 3, welcher nach einer Frage als Erster gedrückt wird, löst über die Steuereinrichtung 10 die Wiedergabe einer Signalfarbe auf dem festgelegten Bereich der Monitorwand 2 unterhalb des Kandidaten aus, welcher den Buzzer 3 als Erster gedrückt hat. Beispielsweise können die Bildschirme aller 5 Monitore, die sich unterhalb des betreffenden Kandidaten befinden, mit der Signalfarbe rot eingefärbt werden, und zwar kontinuierlich für einen festgelegten Zeitraum oder mehrfach blinkend während dieser festgelegten Zeitspanne. Auf den Bildschirmen der übrigen Monitore 2a bleibt während dieser genannten Wiedergabe der Signalfarbe der bisherige Bildinhalt stehen oder es wird kein Bildinhalt wiedergegeben.

Ferner ist die Steuereinrichtung 10 mit den Anzeigen 4 verbunden, falls die Anzeigen 4 getrennt von der Monitorwand 2 vorgesehen sind. Die Steuereinrichtung 10 steuert den momentanen Punktestand der einzelnen Kandidaten, der auf den Anzeigen 4 wiedergegeben wird. Um zu "wissen", ob ein Kandidat, der als Erster auf eine Frage seinen Buzzer 3 gedrückt hat, die für die Frage vorgesehenen Gewinnpunkte gewonnen hat, d.h. ob dem Kandidaten diese Gewinnpunkte auf seinem Konto gutgeschrieben oder eventuell (bei falscher Antwort) abgezogen werden, benötigt die Steuereinrichtung noch einen nicht gezeigten Eingang ±, welcher von dem Moderator oder den Show-Assistenten bedient wird.

Die Videosignalleitungen 17 und die Textsignalleitungen 18 führen von den Quellen 11 bzw. 12 zu einem Bildmischer 15, welcher wiederum von der Steuereinrichtung 10 über den Datenbus 14 gesteuert wird. Mit Hilfe des Bildmischers 15 werden Bilder und Texte in einer von der Steuereinrichtung 10 vorgegebenen Weise überlagert. Die resultierenden 25 Videosignale am Ausgang des Bildmischers 15 werden den Videoeingängen der zugeordneten 25 Monitore 2a zugeführt und dort wiedergegeben. Mit Hilfe des Bildmischers 15 können die Bild- und Textsignale aus den Quellen 11 und 12 nicht nur überlagert, sondern in jeder anderen gewünschten Weise z.B. farblich und in der Helligkeit verändert, ein/-ausgeblendet, be- und verarbeitet werden. Sämtliche dieser videotechnischen Maßnahmen müssen natürlich vorher bei der Programmierung der Steuereinrichtung 10 festgelegt werden.

Das erfindungsgemäße Spielgerät ermöglicht die Durchführung einer Unterhaltungsshow mit einer völlig neuen Bildgestaltung und Bilddramaturgie. Die Kandidaten und ihre Reaktionen auf Fragen sind räumlich und damit auch zeitlich mit der Monitorwand 2 und den darauf zu den einzelnen Fragen wiedergegebenen Bildern, Bildausschnitten, Bildsequenzen, Graphiken und Zahlen untrennbar verbunden. Diese völlig neuen Möglichkeiten der Bildregie erlauben die Entwicklung entsprechend neuer, publikumswirksamer Unterhaltungsshows.

Über die beschriebenen Funktionen hinaus, kann die Monitorwand 2 innerhalb einer Unterhaltungsshow auch noch auf andere vorteilhafte Weise genutzt werden, wenn z.B. der Gewinnkandidat am Ende von drei Fragerunden vor der Monitorwand 2 präsentiert wird, um eine Gewinnfrage zu beantworten. Um auch in dieser Spielsituation dramaturgisch wirksame Spielhandlungen zu absolvieren, kann der Kandidat z.B. eines der 25 Monitorfelder der Monitorwand 2 auswählen, auf dem jeweils ein Fragezeichen oder ein anderes Ratesymbol wiedergegeben wird. Zum Auswählen eines Monitorfeldes kann der Kandidat das gewünschte Monitorfeld berühren, was mit einem Berührungssensor am Bildschirm jedes Monitors 2a erfaßt wird. Die Monitorwand kann auch mit einer Kursor-Steuerung ausgerüstet werden, so daß der Kandidat das gewünschte Monitorfeld mittels eines Kursors auswählen kann. Die Berührungssensorik der Monitoren 2a bzw. die Kursor-Steuerung sind wiederum mit der Steuereinrichtung 10 verbunden, was in Fig. 1 nicht im einzelnen eingezeichnet ist.

Die Steuerung der Monitorwand 2 kann im letztgenannten Beispielsfalle so ausgebildet werden, daß auf dem ausgewählten Monitorfeld des Ratesymbol verschwindet und eine Gewinninformation wiedergegeben wird. Da die Berührungssensorik bzw. die Kursor-Steuerung mit der Steuereinrichtung 10 verbunden sind, ist die Steuereinrichtung 10 in der Lage, das ausgewählte Monitorfeld zu detektieren und dort die zuvor festgelegten Wiedergabeänderungen durchzuführen.

## Patentansprüche

1. Spielgerät zum Durchführen einer Unterhaltungsshow, mit
- einer aus mehreren Monitoren (2a) zusammengesetzten Monitorwand (2),
- Signalquellen (11, 12, 13) für Grafik- und Textsignale,
- einer Steuereinrichtung (10) zur Steuerung der Grafik und/oder Textwiedergabe auf den Monitoren (2a) der Monitorwand (2),
- Auslöseschaltern (3) für mehrere Mitspieler, zur Feststellung, welches des Mitspieler als erster reagiert;
- einer Anzeige (4) für den aktuellen Kontostand der von jedem Mitspieler gesammelten Punkte,
**dadurch gekennzeichnet, daß**
- den einzelnen Mitspielern festgelegte Bereiche der Monitorwand (2) zugeordnet sind,
- die Auslöseschalter (3) mit der Steuereinrichtung (10) elektrisch verbunden sind, und
- die Steuereinrichtung (10) derart ausgebildet ist, daß bei Betätigung eines Auslöseschalters (3) durch den zuerst reagierenden Mitspieler ein optisches Signal auf dem dem betreffenden Mitspieler zugeordneten Bereich der Monitorwand (2) wiedergegeben wird.

2. Spielgerät nach Anspruch 1, **dadurch gekennzeichnet, daß** hinter der Monitorwand (2) eine Tragvorrichtung (6) für die Mitspieler in einer solchen Höhe angebracht ist, daß die Mitspieler zumindest mit ihren Köpfen (5) die Monitorwand (2) überragen.

3. Spielgerät nach Anspruch 1 oder 2, **dadurch gekennzeichnet, daß** eine Bildsignalquelle (11) vorgesehen ist, welche von der Steuereinrichtung (10) derart steuerbar ist, daß stehende oder bewegte Bilder zumindest auf einem Bereich der Monitorwand (2) wiedergebbar sind.

4. Spielgerät nach einem der Ansprüche 1 bis 3, **dadurch gekennzeichnet, daß** die Steuereinrichtung (10) ferner einen Bildmischer (15) für die Bild-, Grafik- und Textsignale steuert.

5. Spielgerät nach einem der Ansprüche 1 bis 4, **dadurch gekennzeichnet, daß** die Steuereinrichtung (10) derart ausgebildet ist, daß unterschiedliche Gewinnpunktezahlen übereinander oder nebeneinander auf der Monitorwand (2) anzeigbar sind.

6. Spielgerät nach einem der Ansprüche 1 bis 4, **dadurch gekennzeichnet, daß** die Steuereinrichtung (10) derart ausgebildet ist, daß jeweils nur die aktuell gespielte Gewinnpunktzahl auf der Monitorwand (2) anzeigbar ist.

7. Spielgerät nach einem der Ansprüche 1 bis 6, **dadurch gekennzeichnet, daß** die Steuereinrichtung (10) derart ausgebildet ist, daß die aktuellen Kontostände der von jedem Mitspieler gesammelten Punkte auf der Monitorwand (2) unterhalb der jeweiligen Mitspieler angezeigt werden.

8. Spielgerät nach einem der Ansprüche 1 bis 6, **dadurch gekennzeichnet, daß** die Anzeigen (4) an der Ober- oder Unterkante der Monitorwand (2) angeordnet sind.

9. Spielgerät nach einem der Ansprüche 1 bis 6, **dadurch gekennzeichnet, daß** die Anzeigen (4) in einer Hängekonsole oberhalb der Mitspieler angeordnet sind.

10. Spielgerät nach einem der Ansprüche 1 bis 9, **dadurch gekennzeichnet, daß** die Auslöseschalter (3) auf der Oberseite der Monitorwand (2) angeordnet sind.

11. Spielgerät nach einem der Ansprüche 1 bis 10, **dadurch gekennzeichnet, daß** die Wiedergabe des optischen Signals über die gesamte vertikale Höhe der Monitorwand (2) erfolgt.

12. Spielgerät nach einem der Ansprüche 1 bis 11, **dadurch gekennzeichnet, daß** die Monitoren (2a) der Monitorwand (2) Berührungssensoren aufweisen, die mit der Steuereinrichtung (10) verbunden sind.

13. Spielgerät nach einem der Ansprüche 1 bis 11, **dadurch gekennzeichnet, daß** die Monitoren (2a) der Monitorwand (2) eine Kursor-Steuerung aufweisen, die mit der Steuereinrichtung (10) verbunden ist.

## Claims

1. Game device for staging an entertainment show, having
- a monitor panel (2) made up of a plurality of monitors (2a)
- signal sources (11, 12, 13) for graphic and text signals,
- a control means (10) for controlling the reproduction of graphics and/or text on the monitors (2a) in the monitor panel (2),
- triggering switches (3) for a plurality of players to determine which of the players responds first,
- an indicator (4) for the current state of account of the points collected by each player,
**characterised in that**
- fixed regions of the monitor panel (2) are assigned to the individual players,
- the triggering switches (3) are electrically connected to the control means (10) and
- the control means (10) is so arranged that if a triggering switch (3) is operated by the first player to respond, a visual signal is reproduced on the region of the monitor panel (2) assigned to the player concerned.

2. Game device according to claim 1, **characterised in that** there is mounted behind the monitor panel (2) a supporting arrangement (6) for the players, at a height such that at least the heads (5) of the players project above the monitor panel (2).

3. Game device according to claim 1 or 2, **characterised in that** an image-signal source (11) is provided which can be controlled by the control means (10) in such a way that still or moving images can be reproduced at least on one region of the monitor panel (2).

4. Game device according to one of claims 1 to 3, **characterised in that** the control means (10) also controls an image mixer (15) for the image, graphics and text signals.

5. Game device according to one of claims 1 to 4, **characterised in that** the control means (10) is so arranged that different numbers of points to be won can be indicated above one another or next to one another on the monitor panel (2).

6. Game device according to one of claims 1 to 4, **characterised in that** the control means (10) is so arranged that in each case only the number of points to be won that is currently being played for is able to be indicated on the monitor panel (2).

7. Game device according to one of claims 1 to 6, **characterised in that** the control means (10) is so arranged that the current account statuses of the points collected by each player are indicated on the monitor panel (2) below the given player.

8. Game device according to one of claims 1 to 6, **characterised in that** the indicators (4) are arranged at the top or bottom edge of the monitor panel (2).

9. Game device according to one of claims 1 to 6, **characterised in that** the indicators (4) are arranged in a suspended console above the players.

10. Game device according to one of claims 1 to 9, **characterised in that** the triggering switches (3) are arranged on the top side of the monitor panel.

11. Game device according to one of claims 1 to 10, **characterised in that** the reproduction of the visual signal takes place over the entire vertical height of the monitor panel (2).

12. Game device according to one of claims 1 to 11, **characterised in that** the monitors (2a) in the monitor panel (2) have touch sensors which are connected to the control means (10).

13. Game device according to one of claims 1 to 11, **characterised in that** the monitors (2a) in the monitor panel (2) have a cursor controller which is connected to the control means (10).

## Revendications

1. Equipement de jeu pour le déroulement d'une émission de divertissement, comportant :
une paroi de contrôle (2) constituée de plusieurs écrans de contrôle (2a),
des sources de signal (11, 12, 13) pour des signaux graphiques et de texte,
un dispositif de commande (10) pour commander la projection de graphiques et/ou de textes sur les écrans de contrôle (2a) de la paroi de contrôle (2),
des boutons-réponse (3) destinés à plusieurs participants, pour déterminer lequel des participants réagit en premier,
un écran d'affichage (4) du montant de points en cours de chaque participant,
**caractérisé en ce que**
des zones déterminées de la paroi de contrôle (2) sont attribuées à chaque participant,
les boutons-réponse (3) sont reliés électriquement au dispositif de commande (10), et
le dispositif de commande (10) est conçu de telle sorte que lors de l'actionnement d'un bouton-réponse (3) par le participant réagissant en premier, celui-ci émet un signal optique au niveau de la zone déterminant le participant correspondant sur la paroi de contrôle (2).

2. Equipement de jeu selon la revendication 1, **caractérisé en ce que** derrière la paroi de contrôle (2), on prévoit un dispositif de support (6) des participants à une hauteur telle qu'au moins leur tête (5) dépasse de la paroi de contrôle (2).

3. Equipement de jeu selon la revendication 1 ou 2, **caractérisé en ce qu'**une source de signal d'image (11) pouvant être commandée à partir du dispositif de commande (10) est prévue, de manière à pouvoir projeter des images fixes ou mobiles sur au moins une zone de la paroi de contrôle. (2).

4. Equipement de jeu selon l'une quelconque des revendications 1 à 3, **caractérisé en ce que** le dispositif de commande (10) commande un mélangeur d'images (15) pour les signaux d'image, graphiques et de textes.

5. Equipement de jeu selon l'une quelconque des revendications 1 à 4, **caractérisé en ce que** le dispositif de commande (10) est conçu de manière à pouvoir afficher divers montants de points de gains les uns au-dessus ou à côté des autres sur la paroi de contrôle (2).

6. Equipement de jeu selon l'une quelconque des revendications 1 à 4, **caractérisé en ce que** le dispositif de commande (10) est conçu de manière à pouvoir afficher uniquement les points de gains en jeu sur la paroi de contrôle (2).

7. Equipement de jeu selon l'une quelconque des revendications 1 à 6, **caractérisé en ce que** le dispositif de commande (10) est conçu de manière à pouvoir afficher les montants de points comptabilisés par chaque participant sur la paroi de contrôle (2) au-dessous des participants correspondants.

8. Equipement de jeu selon l'une quelconque des revendications 1 à 6, **caractérisé en ce que** les écrans d'affichage (4) sont agencés sur les bords supérieur ou inférieur de la paroi de contrôle (2).

9. Equipement de jeu selon l'une quelconque des revendications 1 à 6, **caractérisé en ce que** les écrans d'affichage (4) sont agencés sur une console suspendue au-dessus des participants.

10. Equipement de jeu selon l'une quelconque des revendications 1 à 9, **caractérisé en ce que** les boutons-réponse (3) sont agencés sur le côté supérieur de la paroi de contrôle (2).

11. Equipement de jeu selon l'une quelconque des revendications 1 à 10, **caractérisé en ce que** la projection du signal optique est réalisée sur toute la hauteur verticale de la paroi de contrôle (2).

12. Equipement de jeu selon l'une quelconque des revendications 1 à 11, **caractérisé en ce que** les écrans de contrôle (2a) de la paroi de contrôle (2) comportent des détecteurs de contact, lesquels sont reliés au dispositif de commande (10).

13. Equipement de jeu selon l'une quelconque des revendications 1 à 11, **caractérisé en ce que** les écrans de contrôle (2a) de la paroi de contrôle (2) comportent une commande de curseur, laquelle est reliée au dispositif de commande (10).
